# EUROPEAN PATENT APPLICATION

(11) **EP 1 965 276 A1**
(43) Date of publication of application: **03.09.2008**
(21) Application number: 08002972.1
(22) Date of filing: 18.02.2008
(51) Int. Cl.: G03H 1/18, G11B 7/0065

(54) **Fixing Apparatus, fixing method, and optical information recording apparatus**

(30) Priority: 28.02.2007 JP 2007049646
(71) Applicant: FUJIFILM Corporation, Minato-ku Tokyo 106-8620 (JP)
(72) Inventor: Sasaki, Toshio, Kanagawa (JP)
(74) Representative: Grünecker, Kinkeldey, Stockmair & Schwanhäusser Anwaltssozietät

(57) **Abstract**

A fixing apparatus (1) and a fixing method are disclosed for performing a fixing process on a holographic recording medium (70) with an optically recordable recording layer (71). The fixing apparatus (1) includes a light source (11) which illuminates the recording layer (71) with fixing light, and at least one reflecting mirror (13) which reflects the fixing light passing through the recording layer (71) and makes the fixing light go back again toward the recording layer.

## Description

### BACKGROUND OF THE INVENTION

The present invention relates to a fixing apparatus, a fixing method, and an optical information recording apparatus, by which interference patterns recorded in a recording medium are fixed.

In recent years, development has been carried out on holographic reading/writing technology for recording enormous amounts of data as interference patterns in a holographic recording medium (herein after simply referred to as a "recording medium") made of a photosensitive material such as photopolymer using interference of light waves and also for reading out the recorded data by illuminating the recorded interference patterns with reading light. In this holographic reading/writing technology, interference of an information light and a reference light in the recording medium causes monomer in the recording medium to be changed to polymer to thereby record the interference patterns. Upon reading out the data from the recording medium, the subject interference pattern is illuminated with the reading light which has the same wavelength and the same angle with the reference light. The reading light is then diffracted by the recorded interference pattern to reconstruct the original light corresponding to the information light, thereby enabling reading of the data.

According to such holographic reading/writing technology, upon reading out the data, the recording medium is illuminated with the reading light which is similar to the reference light used for recording of the data. For this reason, if unreacted monomer remains in the recording medium, illumination with the reading light may cause the unreacted monomer to be changed to polymer around the recorded interference patterns. This will lead to deterioration of the recorded interference patterns and a so-called reading deterioration will occur in the end.

In order to prevent deterioration upon reading the recording medium, for example, Japanese Laid-open Patent Application No. 05-234855 discloses illuminating the recording medium with a uniform light after interference patterns are recorded in the recording medium, so that unreacted monomer is equally changed to make the recording medium insensitive and to fix the recorded interference patterns in the recording medium. According to this method, even if the recording medium is illuminated with the reading light upon reading out the data from the recording medium, the recording medium is insensitive and free of deterioration, which can provide an excellent reading performance of the data.

However, the amount of light irradiated for fixing the data is at least equal to or greater than the integrated recording energy (i.e., the whole energy of light to be irradiated on the recording medium upon recording of data). Therefore, the whole process including from the recording to fixing of the data requires at least twice the recording time, and there is a strong demand for decreasing the fixing time.

Further, in general, transmissivity of the recording medium with respect to lights for reading/writing data is set at least to 50% or more, and more preferably to 80% or more, so as to effectively read out the data from the recording medium. Therefore, more than half of the fixing light irradiated to the recording medium passes through the recording medium and is unused. As a result, it is necessary to irradiate the fixing light over an extended period of time.

In view of the above disadvantages of the prior art, the present invention seeks to provide a fixing apparatus, a fixing method, and an optical information recording apparatus, which require less fixing time for fixing the recorded data.

### SUMMARY OF THE INVENTION

According to one aspect of the present invention, there is provided a fixing apparatus for performing a fixing process on a holographic recording medium with an optically recordable recording layer. The fixing apparatus comprises: a light source which illuminates the recording layer with fixing light; and at least one reflecting mirror which reflects the fixing light passing through the recording layer and makes the fixing light go back again toward the recording layer.

With this configuration of the fixing apparatus according to the present invention, the fixing light irradiated from the light source first passes through the recording layer and is then reflected by the reflecting mirror and goes back again toward the recording layer. In other words, the fixing light once passing through the recording layer can be reused for fixing, thereby reducing the amount of time required for fixing.

The aforementioned fixing apparatus may further comprise a rotating device which rotates the holographic recording medium.

With this configuration of the fixing apparatus, since the holographic recording medium is rotated by the rotating device, it is not necessary to irradiate the fixing light to the whole surface of the holographic recording medium. In stead, the fixing light may be irradiated to the holographic recording medium at least in a range from the rotation center to the outermost periphery of the holographic recording medium in order to perform the fixing process.

The aforementioned fixing apparatus may further comprise a moving device which moves at least one of the light source and the rotating device in a direction different from an optical axis of the light source.

With this configuration of the fixing apparatus, when the moving device moves the light source or the rotating device, the relative position between the light source and the rotating device changes. Therefore, even if the whole surface of the holographic recording medium is not illuminated at once with the fixing light having a large spot diameter, the fixing process can be performed on the whole surface of the holographic recording medium, for example, by gradually shifting or offsetting either one of the light source or the rotating device while irradiating the fixing light partly to the outer periphery of the holographic recording medium, so that the fixing light is gradually moved from the outer periphery to the inner periphery of the holographic recording medium.

In the aforementioned fixing apparatus, the holographic recording medium may be of a transmission-type medium which allows transmission of the fixing light. Further, the light source may be arranged to irradiate the fixing light diagonally to a surface of the holographic recording medium, and the at least one reflecting mirror may comprise a pair of reflecting mirrors arranged on both sides of the holographic recording medium with the holographic recording medium interposed therebetween and facing to each reflecting mirror.

With this configuration of the fixing apparatus, the fixing light irradiated from the light source transmits diagonally and passes through the surface of the holographic recording medium, and is alternately reflected by the pair of reflecting mirrors, so that the fixing light passes through the holographic recording medium plural times. Therefore, even if the whole surface of the holographic recording medium is not illuminated at once with the fixing light irradiated from the light source, the fixing process can be performed on the whole surface of the holographic recording medium because the fixing light is repeatedly reflected between the pair of reflecting mirrors.

According to a second aspect of the present invention, there is provided a method of performing a fixing process on a holographic recording medium with an optically recordable recording layer. The method comprises the steps of: illuminating the recording layer with fixing light; and reflecting the fixing light passing through the recording layer so as to make the fixing light go back again toward the recording layer.

The aforementioned method may further comprise rotating the holographic recording medium. Also, the method may further comprise moving at least one of the fixing light and the holographic recording medium in a direction different from an optical axis of the fixing light.

In the aforementioned method, the holographic recording medium may be of a transmission-type medium which allows transmission of the fixing light. Further, the fixing light may be irradiated diagonally to a surface of the holographic recording medium upon illumination of the recording layer with the fixing light, and the fixing light may be alternately reflected using a pair of reflecting mirrors arranged on both sides of the holographic recording medium with the holographic recording medium interposed therebetween and facing to each reflecting mirror.

According to these methods, the same effects as with the aforementioned fixing apparatuses can be obtained.

According to a third aspect of the present invention, there is provided an optical information recording apparatus which causes interference of a reference light and an information light in a recording layer of a holographic recording medium to generate interference patterns as information to be recorded and then writes the information in the recording layer. The optical information recording apparatus comprises: a converter which converts light for illuminating the holographic recording medium into fixing light; and at least one reflecting mirror which reflects the fixing light passing through the recording layer and makes the fixing light go back again toward the recording layer.

With this configuration of the optical information recording apparatus, after the interference patterns are recorded as data in the holographic recording medium, the converter converts light into fixing light. When the fixing light passes through the recording layer, the transmitted fixing light is reflected by the reflecting mirror and goes back again toward the recording layer to illuminate the recording layer. In other words, the fixing light once passing through the recording layer can be reused for fixing, thereby reducing the amount of time required for fixing.

The aforementioned optical information recording apparatus may further comprise an information light generating device which comprises a plurality of mirrors arranged in a matrix manner, and an adjusting device for adjusting or changing an angle of each mirror. The information light generating device generates the information light by means of reflecting light on the mirrors. Further, the converter may irradiate plural patterns of light as the fixing light to a position in the recording layer by means of changing the angle of each mirror. The converter may change the angle of each mirror of the information light generating device before diffusion is completed for residual substances which remain unchanged through the irradiation with the light.

With this configuration of the optical information recording apparatus, upon recording data in the recording layer, the information light generating device changes the angle of each mirror where necessary in accordance with a recording position of the recording layer so that information light associated with the recording position is irradiated from the mirrors. When the fixing process is performed on the recording layer, the convertor changes the angle of each mirror so that plural patterns of light are irradiated as the fixing light to a position in the recording layer. More specifically, the converter changes the angle of each mirror of the information light generating device before diffusion is completed for residual substances which remain unchanged through the irradiation with the light. Therefore, it is possible to prevent deviation of the refractive index due to migration of residual substances (monomer) to thereby provide uniform distribution of the residual substances. This can realize an excellent fixing process of the recorded interference patterns. Further, the information light generating device can also be used as the converter, thereby providing a simple structure of the optical information recording apparatus.

The aforementioned optical information recording apparatus may further comprise an information light generating device which comprises a plurality of liquid crystal elements arranged in a matrix manner each capable of changing its light transmissivity, and an adjusting device for adjusting or changing the light transmissivity of each liquid crystal element. The information light generating device may generate the information light by means of making light pass through the liquid crystal elements. Further, the converter may irradiate plural patterns of light as the fixing light to a position in the recording layer by means of changing the light transmissivity of each liquid crystal element. The converter may change the light transmissivity of each liquid crystal element of the information light generating device before diffusion is completed for residual substances which remain unchanged through the irradiation with the light.

With this configuration of the optical information recording apparatus, upon recording data in the recording layer, the information light generating device changes the light transmissivity of each liquid crystal element where necessary in accordance with a recording position of the recording layer so that information light associated with the recording position is irradiated from the liquid crystal elements. When the fixing process is performed on the recording layer, the converter changes the light transmissivity of each liquid crystal element so that plural patterns of light are irradiated as the fixing light to a position in the recording layer. More specifically, the converter changes the light transmissivity of each liquid crystal element of the information light generating device before diffusion is completed for residual substances which remain unchanged through the irradiation with the light. Therefore, it is possible to prevent deviation of the refractive index due to migration of residual substances (monomer) to thereby provide uniform distribution of the residual substances. This can realize an excellent fixing process of the recorded interference patterns. Further, the information light generating device can also be used as the converter, thereby providing a simple structure of the optical information recording apparatus.

In the aforementioned optical information recording apparatus, the converter may comprise a rough-surfaced plate having a frosted glass-like surface and allowing transmission of light, and a plate-moving device which moves the rough-surfaced plate within an extension plane of the frosted glass-like surface across a passage of the light.

With this configuration of the optical information recording apparatus, when light passes through the rough-surfaced plate that is moved within the extension plane of the frosted glass-like surface across the passage of the light, the wavelength of the light changes so that the light is converted into the fixing light. Therefore, the optical information recording apparatus realizes an excellent fixing process of the recorded interference patterns.

In the aforementioned optical information recording apparatus, the optical information recording apparatus may be used for recording information in a reflection-type holographic recording medium. In the case where the optical information recording apparatus further comprises a data reading device which reads light that is reflected at the interference patterns recorded in the recording layer, the reflecting mirror may be arranged to reflect the fixing light going in a direction toward the data reading device.

With this configuration of the optical information recording apparatus, upon reading data from the holographic recording medium, the interference patterns recorded in the recording layer are illuminated with light which is similar to the reference light, so that light reflected at the recorded interference patterns goes in a direction toward the data reading device and is read out by this data reading device. Meanwhile, upon applying the fixing process, light is irradiated to the recording layer. The fixing light first passes through the recording layer of the reflection-type holographic recording medium and is reflected at the reflective layer so that the fixing light goes back toward the data reading device, and thereafter the fixing light is reflected by the reflecting mirror and goes back again toward recording layer. Therefore, the optical information recording apparatus realizes an excellent fixing process of the recorded interference patterns.

In the aforementioned optical information recording apparatus, the optical information recording apparatus may be used for recording information in a transmission-type holographic recording medium. In this instance, it is preferable that the at least one reflecting mirror comprises a first reflecting mirror arranged in an opposite position of the holographic recording medium from a position where the light is irradiated to the holographic recording medium.

Further, in the case where the optical information recording apparatus further comprise a data reading device which reads reading light that is reflected at the interference patterns recorded in the recording layer, it is preferable that the at least one reflecting mirror comprises the first reflecting mirror, and a second reflecting mirror that is arranged to reflect the fixing light going in a direction toward the data reading device.

With this configuration of the optical information recording apparatus, light that has once passed through the recording layer is reflected by the first reflecting mirror and goes back again toward the recording layer to illuminate the recording layer, thereby reducing the amount of time required for fixing. Further, providing the second reflecting mirror enables the light that has reflected back at the first reflecting mirror to be reflected back again toward the recording layer to illuminate the recording layer, thereby further reducing the amount of time required for fixing.

According to a fourth aspect of the present invention, there is provided a method of performing a fixing process on a holographic recording medium set in an optical information recording apparatus. The optical information recording apparatus causes interference of a reference light and an information light in a recording layer of the holographic recording medium to generate interference patterns as information to be recorded, and thereafter writes the information in the recording layer. The method comprises: converting light into fixing light and illuminating the recording layer with the fixing light; and reflecting the fixing light passing through the recording layer so as to make the fixing light go back again toward the recording layer.

In the aforementioned fixing method, the optical information recording apparatus may further comprise an information light generating device which comprises a plurality of mirrors arranged in a matrix manner, and an adjusting device for adjusting or changing an angle of each mirror. The information light generating device generates the information light by means of reflecting light on the mirrors. Further, converting the light into the fixing light may be performed by means of changing the angle of each mirror so that plural patterns of light are irradiated as the fixing light to a position in the recording layer, and the angle of each mirror of the information light generating device may be further changed before diffusion is completed for residual substances which remain unchanged through the irradiation with the light.

In the aforementioned fixing method, the optical information recording apparatus may further comprise an information light generating device which comprises a plurality of liquid crystal elements arranged in a matrix manner each capable of changing its light transmissivity, and an adjusting device for adjusting or changing the light transmissivity of each liquid crystal element. The information light generating device generates the information light by means of making light pass through the liquid crystal elements. Further, converting the light into the fixing light may be performed by changing the light transmissivity of each liquid crystal element so that plural patterns of light are irradiated as the fixing light to a position in the recording layer, and the light transmissivity of each liquid crystal element may be further changed before diffusion is completed for residual substances which remain unchanged through the irradiation with the light.

In the aforementioned fixing method, converting the light into the fixing light may be performed by moving a rough-surfaced plate which has a frosted glass-like surface and allows transmission of light within an extension plane of the frosted glass-like surface across a passage of the light.

Further, in the aforementioned fixing method, the optical information recording apparatus may be used for recording information in a reflection-type holographic recording medium. In this instance, the reflection-type holographic recording medium may include a reflective layer capable of reflecting light in addition to the recording layer, and further comprise a data reading device which reads light that is reflected at the interference patterns recorded in the recording layer. Reflecting the fixing light may be performed by reflecting the fixing light that goes in a direction toward the data reading device in the opposite direction.

In the aforementioned fixing method, the optical information recording apparatus may be used for recording information in a transmission-type holographic recording medium which allows transmission of light. In this instance, reflecting the fixing light may be performed by a first reflecting mirror that is arranged in an opposite position of the holographic recording medium from a position where the light is irradiated to the holographic recording medium.

Further, in the case where the optical information recording apparatus further comprises a data reading device which reads light that is reflected at the interference patterns recorded in the recording layer, a second reflecting mirror reflects the fixing light reflected by the first reflecting mirror and going in a direction toward the data reading device.

According to these fixing methods, the same effects as with the aforementioned optical information recording apparatus can be obtained.

According to the present invention, the fixing light once passing through the recording layer is reflected so that the fixing light can be reused for illumination of the recording layer, thereby reducing the amount of time required for fixing.

### BRIEF DESCRIPTION OF THE DRAWINGS

Other objects and aspects of the present invention will become more apparent by describing in detail illustrative, non-limiting embodiments thereof with reference to the accompanying drawings, in which:
FIG. 1 schematically shows the configuration of a fixing apparatus according to a first embodiment of the present invention;
FIG. 2 is a graph showing relations between the number of light transmission relative to the recording medium and light use efficiency in the recording medium, as the basis for recording media having a different optical-absorption coefficient;
FIG. 3A is a sectional view of a fixing apparatus according to a second embodiment of the present invention, and FIG. 3B is a plan view of the same;
FIG. 4A is a sectional view illustrating a modification of the second embodiment, and FIG. 4B is a plan view of the same;
FIG. 5 schematically shows the configuration of an optical information recording apparatus according to a third embodiment of the present invention; and
FIG. 6 schematically shows the configuration of an optical information recording apparatus according to a fourth embodiment of the present invention.

### DETAILED DESCRIPTION OF THE INVENTION

### FIRST EMBODIMENT

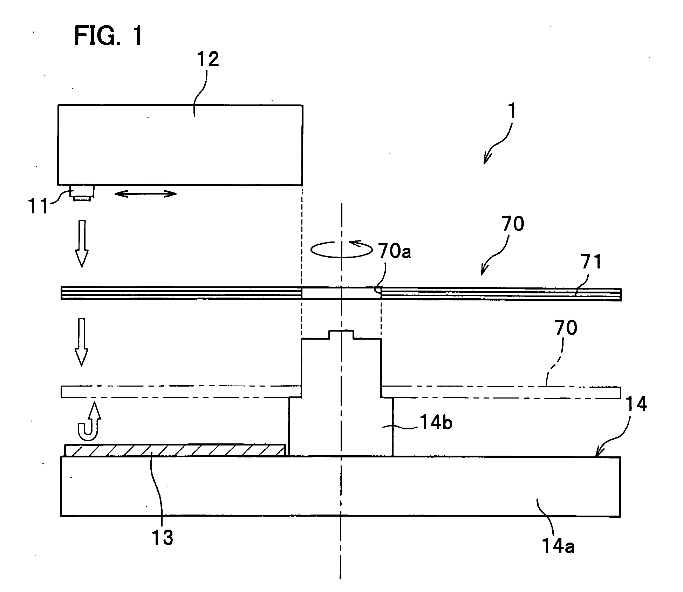

With reference to FIG. 1, a first embodiment of the present invention will be described below.

As seen in FIG. 1, a fixing apparatus 1 performs a fixing process on a holographic recording medium 70 (hereinafter simply referred to as a recording medium 70) in which data is recorded as interference patterns by means of holographic recording.

The recording medium 70 is a disc-like member made of a flexible film, etc. An attachment opening 70a having a predetermined size is formed in the center of the recording medium 70. The recording medium 70 is of a transmission-type recording medium which allows transmission of light. The recording medium 70 consists of a plurality of layers, and one of the layers is a recording layer 71 in which interference patterns have been recorded.

The recording layer 71 is made of a material, for example, selected from (1) photopolymers causing a polymerization reaction in response to light irradiation and being highly polymerized, (2) photorefractive materials exhibiting a photorefractive effect (space charge distribution is caused by irradiation of light and thus the refractive index is modulated), (3) photochromic materials whose molecules are isomerized by irradiation of light and the refractive index thereof is modulated, (4) inorganic materials such as lithium niobate, and barium titanate, and (5) chalcogen materials. In the recording layer 71, optical characteristics such as refractive index are changed in accordance with intensity of irradiated light, interference of light at the recorded interference patterns, etc. As long as the recording medium 70 is provided with the recording layer 71 having the above characteristics, the recording medium 70 is not limited to this specific structure. For example, in addition to the recording layer 71, the recording medium 70 may be provided with other optional layers such as a servo layer for tracking servo control, and a selective reflective layer for selectively transmitting or reflecting laser light in accordance with the wavelength of the laser light.

The fixing apparatus 1 includes a light source 11, a moving device 12 which supports the light source 11 in a movable manner, a reflecting mirror 13 arranged on the opposite side of the light source 11, and a rotating device 14 which rotates the recording medium 70.

The light source 11 illuminates the recording layer 71 with fixing light. More specifically, the light source 11 irradiates the fixing light in a direction orthogonal to the surface of the recording medium 70. It is preferable that the fixing light is incoherent, i.e., of low coherence and has a wavelength which can promote polymerization reaction or isomerization of molecules in the recording layer 71. For this reason, an LED (Light Emitting Diode) or the like is used as the light source 11.

The moving device 12 moves the light source 11 in a direction different from the optical axis of the light source 11 and more specifically in a diametrical direction of the recording medium 70. The moving device 12 is arranged above the recording medium 70. The movement speed of the light source 11 by the moving device 12 is appropriately set in accordance with the rotation speed of the rotating device 14 to be described later, so that the whole surface of the recording medium 70 can be illuminated with the fixing light that is irradiated from the light source 11 to be moved by the moving device 12. The movement speed of the light source 11 may be constant. Alternatively, the movement speed of the light source 11 may gradually become faster as the light source 11 moves from the outer periphery to the inner periphery of the recording medium 70.

The reflecting mirror 13 is provided on the opposite side of the light source 11 with the recording medium 70 interposed therebetween. The reflecting mirror 13 reflects the fixing light that is irradiated from the light source 11 and passed through the recording layer 71, so that the fixing light goes back again toward the recording layer 71.

The rotating device 14 mainly comprises a basement 14a, a spindle 14b which is rotatable relative to the basement 14a, and a motor (not shown) for rotating the spindle 14b. The recording medium 70 is attached to the spindle 14b through the attachment opening 70a, so that the recording medium 70 is rotatable relative to the basement 14a.

The fixing process of the fixing apparatus 1 according to this embodiment will be described. In the following description, the position where the light source 11 is directed to the outermost periphery of the recording medium 70 as seen in FIG. 1 is referred to as the initial position of the light source 11.

As shown in FIG. 1, when the recording medium 70 is set on the spindle 14b of the rotating device 14 and the fixing apparatus 1 operates, the recording medium 70 is started in rotation while the light source 11 irradiates the fixing light toward the recording layer 71 (light irradiation process). The fixing light passing through the recording layer 71 is then reflected by the reflecting mirror 13 and goes back again toward the recording layer 71 (reflection process).

It is noted that the velocity of the fixing light to be irradiated from the light source 11 is far faster than the rotation speed of the rotating device 14, and therefore the fixing light reflected by the reflecting mirror 13 passes through the substantially same area of the recording medium 70 where the fixing light irradiated from the light source 11 has once passed through. Therefore, once the light source 11 irradiates the fixing light, the fixing light passes through a part of the recording medium 70 twice.

The fixing process is performed on the recording medium when the light source 11 is moved from the outermost periphery to the innermost periphery of the recording medium 70 (moving process) while rotating the recording medium 70 by the rotating device 14 (rotation process). To be more specific, the fixing process is performed by the fixing light that is irradiated twice to the recording medium 70 and moved gradually from the outermost periphery to the innermost periphery of the recording medium 70.

According to the first embodiment, the fixing light once passing through the recording layer 71 is reflected by the reflecting mirror 13 so that the fixing light goes back again toward the recording layer 71, thereby reducing the amount of time required for fixing.

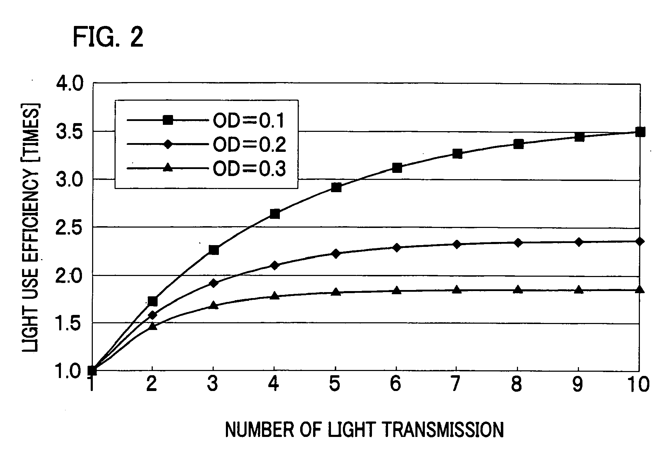

With reference to FIG. 2, relations between the number of light transmission relative to the recording medium and light use efficiency in the recording medium are plotted on the graph, as the basis for recording media having a different optical-absorption coefficient OD. According to this graph, in the case where the optical-absorption coefficient OD is 0.1 and light is transmitted twice through the recording medium as with the first embodiment as above, it is found that the light use efficiency is improved approximately 1.8 times higher than when the light is transmitted once (i.e., the light use efficiency is 1.0). It is also found that the light use efficiency gradually increases as the number of light transmission increases after the light passes twice through the recording medium. Therefore, light is more effectively used if the fixing light is reflected twice or more than when the fixing light is not reflected. This can realize a reliable and improved fixing process.

The present invention is not limited to this specific example as disclosed in the first embodiment, and various changes and modifications may be made without departing from the scope of the appended claims.

According to the first embodiment, the whole surface of the recording medium 70 is illuminated with the fixing light by means of moving the light source 11 in the diametrical direction of the recording medium 70 while rotating the recording medium 70. However, the present invention is not limited to this specific configuration. For example, a large-sized light source may be provided which can illuminate the whole surface of the recording medium 70 at once, or it is possible to combine a light source which can illuminate the radial area of the recording medium 70 and the rotating device 14 as described in the first embodiment. However, as disclosed in the first embodiment, if the moving device 12 is used with the rotating device 14, a small-sized light source such as an LED may be used.

According to the first embodiment, the light source 11 is moved diametrically of the recording medium 70. However, the present invention is not limited to such configuration. As long as the light source 11 is moved from the outer edge of the recording medium 70 to the outer periphery of the attachment opening 70a, the movement direction of the light source 11 may be any directions other than the diametrical direction. Even in this instance, the whole surface of the recording medium 70 can be illuminated with the fixing light that is irradiated from the light source 11 having a spot diameter smaller than the recording medium 70.

Further, according the first embodiment, the moving device 12 moves the light source 11 in a direction different from the optical axis of the light source 11. However, the present invention is not limited to such configuration, and it is possible to move the rotating device relative to the light source 11.

### SECOND EMBODIMENT

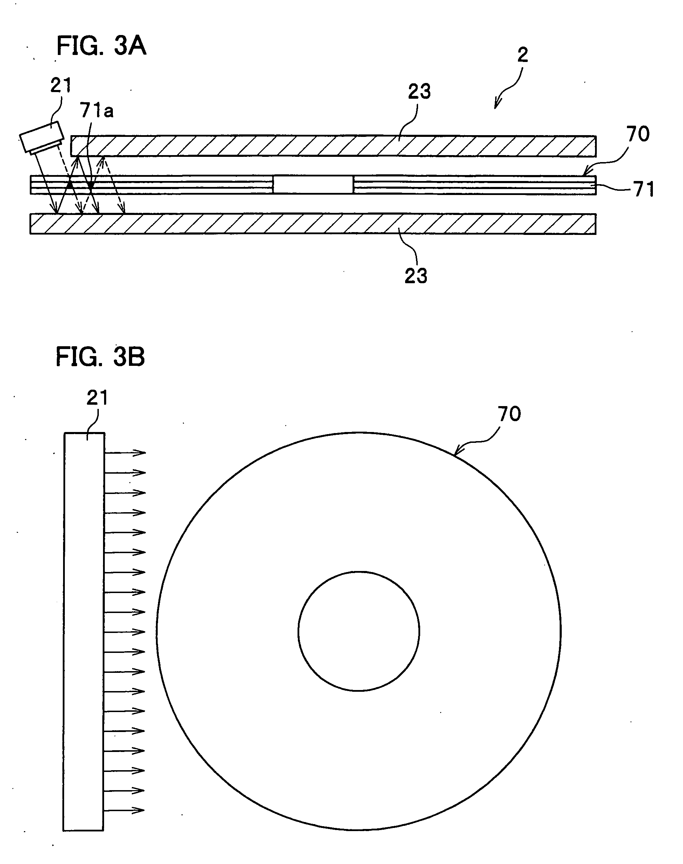

With reference to FIGS. 3A and 3B, a second embodiment of the present invention will be described below. In this preferred embodiment, the same transmission-type recording medium 70 as that disclosed in the first embodiment will be used, and it is denoted by the same reference numeral. Accordingly, detailed description of the recording medium 70 will be omitted.

As seen in FIG. 3A, a fixing apparatus 2 according to the second embodiment includes a light source 21 for illuminating the recording medium 70 with fixing light, and a pair of reflecting mirrors 23, 23 arranged oppositely to each other with the recording medium 70 interposed therebetween.

The light source 21 is arranged above the outermost periphery of the recording medium 70 at a predetermined angle so as to irradiate the fixing light diagonally to the surface of the recording medium 70. As best seen in FIG. 3B, the width of the light source 21 is substantially the same as the diameter of the recording medium 70 so that the light source 21 irradiates the fixing light whose width is substantially the same as the diameter of the recording medium 70. Meanwhile, as best seen in FIG. 3A, the thickness of the fixing light is set such that beams of the fixing light reflected by the reflecting mirrors 23, 23 are superposed to each other in the recording layer 71.

Each of the upper and lower reflecting mirrors 23, 23 is arranged with a predetermined space on the opposite side of the upper and lower surfaces of the recording medium 70, respectively.

The fixing process of the fixing apparatus 2 according to the second embodiment will be described.

As seen FIGS. 3A and 3B, the recording medium 70 is set in the fixing apparatus 2 between the pair of reflecting mirrors 23, 23, and thereafter the light source 21 irradiates the fixing light diagonally to the surface of the recording medium 70. The fixing light passing through the recording layer 71 is reflected by the lower reflecting mirror 23 and goes back again toward the recording layer 71.

In this instance, part of the recording layer 71 where the fixing light has once passed through, that is an area 71a, is illuminated again with the fixing light reflected by the lower reflecting mirror 23. In other words, the fixing light passes through the part of the recording layer 71 twice. Thereafter, the fixing light is alternately reflected between the pair of reflecting mirrors 23, 23 so that the fixing light passes through the whole surface of the recording layer 71.

According to the second embodiment, the fixing light that is irradiated diagonally to the surface of the recording medium 70 is alternately reflected by the pair of reflecting mirrors 23, 23 and passes through the whole surface of the recording layer 71, so that the fixing light is superposed at the area 71a of the recording layer 71 and the fixing light passes through the area 71a twice. Therefore, it is not necessary to provide a large-sized light source which irradiates the fixing light for covering the whole surface of the recording medium 70, and the fixing process can be performed on the whole surface of the recording medium 70 using a relatively small-sized light source 21.

Although the present invention has been described with reference to the second embodiment as above, it is to be understood that the present invention is not limited to this specific embodiment and various changes and modifications may be made without departing the scope of the appended claims.

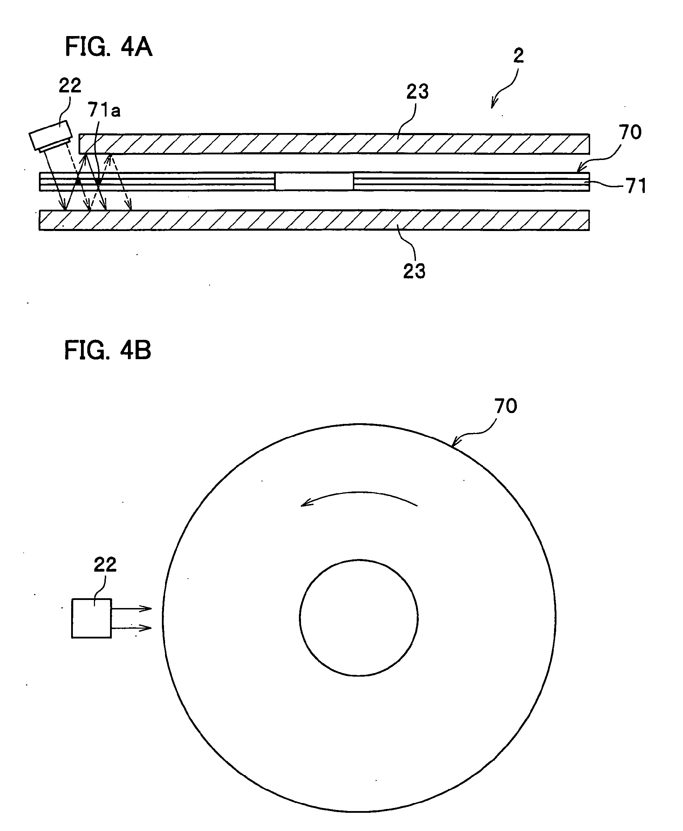

According to the second embodiment, in order to perform effective transmission of the fixing light entirely over the recording medium 70, the width of the light source 21 is substantially the same as the outer diameter of the recording medium 70. However, the present invention is not limited to this specific configuration. For example, as seen in FIGS. 4A and 4B, the width of the light source 22 may be smaller than the outer diameter of the recording medium 70. In this instance, the same rotating device 14 as that disclosed in the first embodiment is employed. Therefore, the whole surface of the recording medium 70 is illuminated with the fixing light while the rotating device 14 rotates the recording medium 70.

### THIRD EMBODIMENT

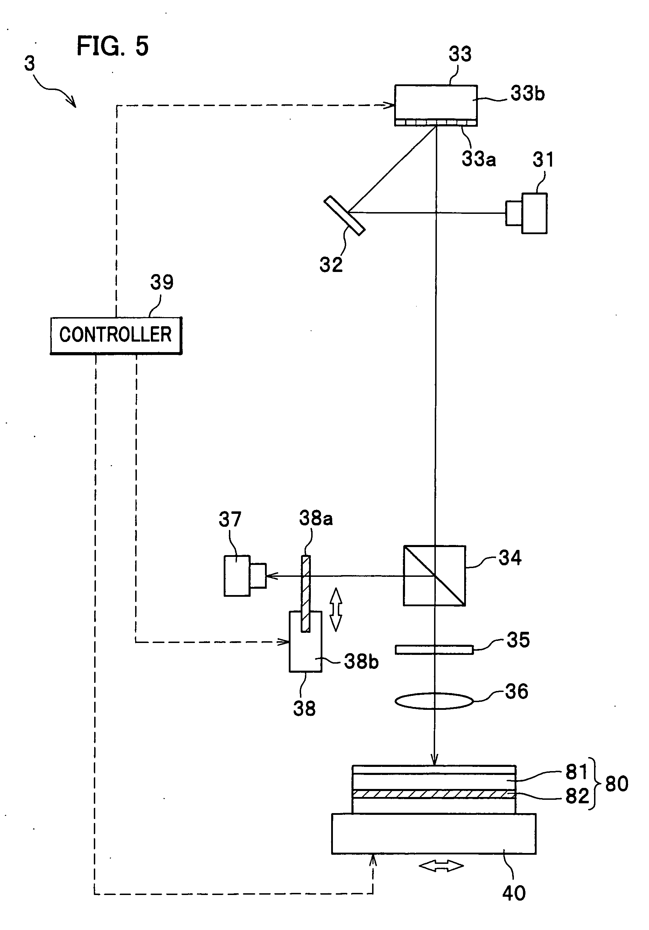

With reference to FIG. 5, a third embodiment of the present invention will be described below.

As seen in FIG. 5, an optical information recording apparatus 3 records interference patterns in a reflection-type recording medium 80 mainly comprising a recording layer 81, and a reflective layer 82 capable of reflecting light. The optical information recording apparatus 3 mainly includes a light source 31, a mirror 32, a DMD (Digital Micro-mirror Device) chip 33, a splitter 34, a wave plate 35, and a condensing lens 36. Further, the optical information recording apparatus 3 includes a data reading device 37 which reads light that is reflected at the interference patterns recorded in the recording medium 80, a fixing light reflecting device 38 which reflects the fixing light used for the fixing process, and a controller 39. In the optical information recording apparatus 3, a basement 40 is further provided for supporting the recording medium 80. The basement 40 is relatively movable in a direction orthogonal to the optical axis of the light that is irradiated to the recording medium 80. By this movement of the basement 40, information is recorded entirely in the recording medium 80.

The light source 31 irradiates coherent light and is arranged in a direction to irradiate the light to the mirror 32.

The mirror 32 is arranged in such a position to reflect the light from the light source 31 and to make the light go back again toward the DMD chip 33.

The DMD chip 33 includes a plurality of tiny mirrors 33a arranged in a matrix manner, and a plurality of adjusting devices 33b each of which adjusts or changes the angle of each mirror. The DMD chip 33 generates an information light and a reference light by means of reflecting the light from the mirror 32 using the mirrors 33a. To be more specific, directions of the mirrors 33a arranged around the outer periphery of the DMD chip 33 are fixed such that the light irradiated from the mirrors 33a is directed to the splitter 34. On the contrary, directions of the mirrors 33a arranged inside these peripherally-arranged mirrors 33a are appropriately adjusted such that some of the light irradiated from the mirrors 33a is directed to the splitter 34 and the other of it is directed to other directions. The light reflected by the peripherally-arranged mirrors 33a is used as a reference light, whereas the light reflected by the mirrors 33a which are adjusted at random directions inside the peripherally-arranged mirrors 33a is used as an information light.

The splitter 34 allows transmission of light which vibrates in a predetermined direction (hereinafter referred to as "longitudinal-wave light"), and reflects light which vibrates in the direction orthogonal to the longitudinal-wave light (hereinafter referred to as "transverse-wave light"). In this preferred embodiment, the light going from the DMD chip 33 is longitudinal-wave light, and the light going in the order of the DMD chip 33, the reflective layer 82, the wave plate 35, and the splitter 34 is transverse-wave light, and further the light going in the order of a reflecting mirror 38a to be described later, the splitter 34, the reflective layer 82, the wave plate 35, and the splitter 34 is longitudinal-wave light.

The wave plate 35 is a so-called quarter-wave plate, which can convert linearly polarized light to circular and vice versa.

The condensing lens 36 condenses the reference light and the information light, which have come from the DMD chip 33 and passed through the splitter 34 and the wave plate 35, into the reflective layer 82 of the recording medium 80 where the reference light and the information light are appropriately reflected and caused to interfere with each other in the recording layer 81.

The data reading device 37 illuminates the interference patterns recorded in the recording layer 81 with reading light which is similar to the reference light, to thereby read out as data the light which comes from the recorded interference patterns and in order passes through the condensing lens 36, the wave plate 35, and the splitter 34.

The fixing light reflecting device 38 includes a reflecting mirror 38a which reflects the fixing light that is going in the direction toward the data reading device 37 back into the splitter 34, and a mirror moving device 38b which advances and retracts the reflecting mirror 38a between a reflective position and a retracted position. Herein, the reflective position refers to a predetermined position across a passage of the light that goes in the direction from the splitter 34 toward the data reading device 37. On the contrary, the retracted position refers to a predetermined position (where the light does no collide with the reflecting mirror 38a) away from the passage of the light. The mirror moving device 38b is controlled by the controller 39.

The controller 39 mainly controls the DMD chip 33 and the fixing light reflecting device 38. To be more specific, when data is recorded as interference patterns in the recording medium 80, the controller 39 controls to adjust or change the angle of each mirror 33a of the DMD chip 33 where necessary in accordance with a recording position of the recording layer 81 so that a reference light and an information light are irradiated from the DMD chip 33 toward the splitter 34. Namely, at one recording position of the recording medium 80 the controller 39 adjusts and retains the mirrors 33a to predetermined angles, and at other positions of the recording medium 80 the controller 39 adjusts the mirrors 33a to different angles. It is noted that the DMD chip 33 functions to generate the information light and the reference light when it is controlled by the controller 39 during the data recording process.

During the fixing process, the controller 39 controls to change the angles of the mirrors 33a of the DMD chip 33 at random so that plural patterns of lights are irradiated as fixing light to an area of the recording layer 81. In other words, the DMD chip 33 functions as a converter for converting the light into the fixing light when it is controlled by the controller 39 during the fixing process. Further, during the fixing process, the controller 39 changes the angles of the mirrors 33a of the DMD chip 33 before diffusion is completed for residual substances which remain unchanged through the irradiation with the light. When the fixing process is performed on the recording medium 80 using the DMD chip 33, interference patterns are inevitably formed in the recording layer 81. According to this embodiment, the controller 39 changes the angles of the mirrors 33a before diffusion is completed for residual substances which remain unchanged through the irradiation with the light. This makes it possible to perform the fixing process without forming interference patterns in the recording layer 81. According to this embodiment, it is possible to prevent deviation of the refractive index due to migration of the residual substances (monomer) to thereby provide uniform distribution of the residual substances.

To be more specific, in the case where the recording layer 81 is of the type in which illumination with light causes monomer to be changed to polymer to thereby record interference patterns as data, the monomer undergoes polymerization reaction in response to the first irradiation of light and changes to polymer. Therefore, the concentration of the monomer becomes lower at the area adjacent to this polymer. The unreacted monomer remaining in the recording layer 81 migrates to the polymer in order to compensate the nonuniform concentration and to provide a uniform concentration of the monomer. However, if the next pattern of light is irradiated to the recording layer 81 before completion of the diffusion of residual substances by means of changing the angles of the mirrors 33, the unreacted monomer remaining in the recording layer 81 uniformly changes to polymer without migrating from a higher concentration area to a lower concentration area. Therefore, it is possible to perform a uniform and excellent fixing process. The angles of the mirrors 33a are changed at least twice including the first adjustment by which the recording process is switched to the fixing process. However, the number of mirror angle adjustments is arbitrarily determined.

The terms "diffusion is completed for residual substances which remain unchanged through the irradiation with the light" or "completion of the diffusion" indicate that the migration of unreacted monomer has been finished. If the recording layer 81 is made of general photopolymer used for information recording, it takes about 5 to 10 seconds from "polymerization reaction of the monomer" to "completion of the diffusion".

The controller 39 also controls the mirror moving device 38b of the fixing light reflecting device 38 such that the reflecting mirror 38a is moved to the retracted position during the data recording, whereas the reflecting mirror 38a is moved to the reflective position during the fixing process. Further, the controller 39 controls to move the basement 40 after data is recorded and fixed in a position of the recording medium 80, so that data is recorded and fixed entirely in the recording medium 80 that is set on the basement 40.

The recording process and the fixing process of the optical information recording apparatus 3 according to this preferred embodiment will be described. In the following description, the reflecting mirror 38a is initially positioned in the retracted position (initial position).

Firstly, description will be given of the recording process.

When the light source 31 irradiates light, the light is reflected by the mirror 32 and goes in the direction toward the DMD chip 33. The DMD chip 33 is appropriately controlled by the controller 39 so that the light coming from the mirror 32 is divided into a reference light and an information light and irradiated toward the splitter 34.

The reference light and the information light then pass through the splitter 34, the wave plate 35, and the condensing lens 36 in this order, and they are irradiated to the recording medium 80 where interference of the reference light and the information light occurs in the recording layer 81. Accordingly, interference patterns are formed in the recording layer 81. After formation of the interference patterns, the controller 39 controls the movement of the basement 40 so that the position of the recording medium 80 changes in a sequential manner and data is recorded entirely in the recording medium 80.

Next, description will be given of the fixing process.

After data is recorded entirely in the recording medium 80, the reflecting mirror 38a is moved to the reflective position by the controller 39. At the same time, the angle of each mirror 33a of the DMD chip 33 is changed by the controller 39 so as to perform the first irradiation of light. Thereafter, the angles of the mirrors 33a are sequentially changed to perform the second time irradiation, the third time irradiation, etc. (converting process) before diffusion is completed for residual substances which remain unchanged through the irradiation with the light. Accordingly, the light reflected by the DMD chip 33 is converted into fixing light, which is then irradiated to the recording medium 80 after passing through the splitter 34, the wave plate 35, and the condensing lens 36.

The fixing light irradiated to the recording medium 80 first passes through the recording layer 81, and is reflected back at the reflective layer 82 and again passes through the recording layer 81. The fixing light is then irradiated upward from the recording layer 81, and goes in the order of the condensing lens 36 and the wave plate 35, and is finally reflected by the splitter 34 and goes in the direction toward the reflecting mirror 38a.

The fixing light reflected by the splitter 34 is then reflected back at the reflecting mirror 38a in the opposite direction and returns to the splitter 34, at which the fixing light is again reflected downward and goes in the direction toward the recording layer 81 while passing through the wave plate 35 and the condensing lens 36, so that the fixing light is irradiated again to the recording layer 81 (reflection process). After this, the fixing light is again reflected back at the reflective layer 82, and then passes through the splitter 34 to the outside. After a part of the recording layer 81 is illuminated with the fixing light, the controller 39 controls the movement of the basement 40 so that the position of the recording medium 80 changes in a sequential manner and the fixing process is performed entirely on the recording medium 80.

According to the third embodiment, the fixing light is alternately reflected between the reflective layer 82 and the reflecting mirror 38a so as to pass through the recording layer 81 multiple times. Therefore, it is possible to reduce the amount of time required for fixing.

Further, the DMD chip 33 for generating a reference light and an information light is controlled such that the angles of the mirrors 33a are changed to generate fixing light. Therefore, it is not necessary to provide a separate light source for irradiating the fixing light to the recording medium 80. This can contribute to simplifying the structure as well as reduction in the cost.

### FOURTH EMBODIMENT

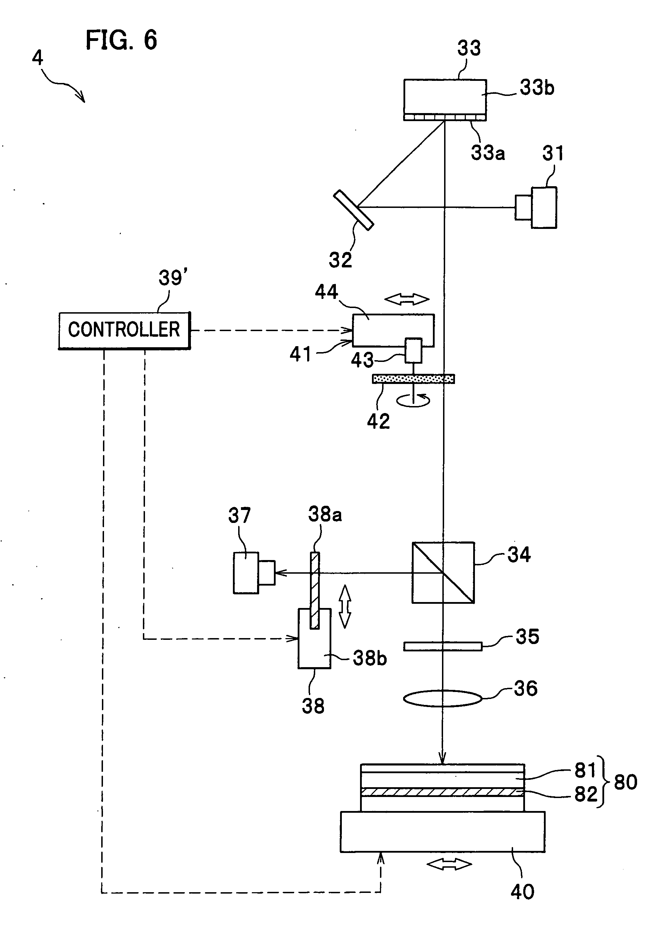

With reference to FIG. 6, a fourth embodiment of the present invention will be described below.

An optical information recording apparatus 4 according to this embodiment is provided by partly modifying the optical information recording apparatus 3 according to the third embodiment. In the drawings, parts similar to those previously describe with reference to the third embodiment are denoted by the same reference numerals, and detailed description thereof will be omitted.

As seen in FIG. 6, the optical information recording apparatus 4 further includes a fixing light converting device 41 in addition to the optical information recording apparatus 3 according to the third embodiment. In this preferred embodiment, during the fixing process, a controller 39' controls the fixing light converting device 41 instead of the DMD chip 33.

The fixing light converting device 41 includes a frosted glass member 42, a motor 43 for rotating the frosted glass member 42, and a glass moving device 44 for moving the frosted glass member 42 in a direction substantially orthogonal to the optical axis of the DMD chip33.

The frosted glass member 42 is in the form of a disc, and the center part of the frosted glass member 42 is connected to the rotation shaft of the motor 43. During the fixing process, the frosted glass member 42 is rotated by the motor 43 so that light irradiated from the DMD chip 33 is converted into incoherent fixing light having dispersed wavelength distribution.

The motor 43 includes the rotation shaft which is connected to the frosted glass member 42, and a body which is fixed to the glass moving device 44.

The glass moving device 44 supports the frosted glass member 42 through the motor 43 and moves the frosted glass member 42 between a fixing process position and a retracted position. Herein, the fixing process position refers to a position where the light from the DMD chip 33 passes through a predetermined area offsetting from the center of the frosted glass member 42, whereas the retracted position refers to a predetermined position away from the passage of the light irradiated from the DMD chip 33 (i.e., position where the light does not collide with the frosted glass member 42).

The controller 39' controls the glass moving device 44 where necessary such that the frosted glass member 42 is positioned in the retracted position during the data recording and positioned in the fixing process position during the fixing process. During the fixing process, the controller 39' controls to drive the motor 43 to rotate the frosted glass member 42. The manner of controlling the fixing light reflecting device 38 and the basement 40 as well as the manner of controlling the DMD chip 33 upon data recording are the same as those described with reference to the third embodiment.

Description will be given of the fixing process using the optical information recording apparatus 4 according to the fourth embodiment. Since the recording process is the same as that of the third embodiment, detailed description thereof will be omitted.

After data is recorded in the recording medium 80, the reflecting mirror 38a is moved to the reflective position by the controller 39'. At the same time, the frosted glass member 42 is moved to the fixing process position and rotated (converting process). Therefore, light passing through the frosted glass 42 is converted into fixing light, which is then irradiated to the recording medium 80 after passing through the splitter 34, the wave plate 35, and the condensing lens 36. Thereafter, the same fixing process as that disclosed in the third embodiment is performed.

According to the fourth embodiment, when the light passes through the rotating frosted glass member 42, the wavelength distribution of the light is dispersed. This makes it possible to obtain excellent fixing light, thereby realizing an excellent fixing process.

The present invention is not limited to the specific examples as disclosed in the third embodiment and the fourth embodiment, and various changes and modifications may be made without departing from the scope of the appended claims.

According to the third and fourth embodiments, the information light and the reference light are generated using the DMD chip 33. However, the present invention is not limited to this configuration. For example, the DMD chip 33 may only generate the information light, and the reference light may be irradiated from another light source. Further, the information light generating device for generating the information light is not limited to the DMD chip 33, and for example, a spatial light modulator (SLM) may be employed.

The spatial light modulator is capable of changing the light transmissivity, and includes a plurality of liquid crystal elements arranged in a matrix manner, and an adjusting device for adjusting or changing the light transmissivity of each liquid crystal element. The spatial light modulator generates the information light by means of making light pass through the liquid crystal elements. In the case where the spatial light modulator is used as the information light generating device, the spatial light modulator can convert light into fixing light as with the third embodiment. Namely, the controller 39' changes the light transmissivity of each liquid crystal elements of the spatial light modulator before diffusion is completed for residual substances which remain unchanged through the irradiation with the light. This makes it possible to irradiate plural patterns of light as fixing light to a position in the recording layer.

According to the third and fourth embodiments, the fixing process is performed on the reflection-type recording medium 80. However, the present invention is not limited for use with the reflection-type recording medium and may be used with a transmission-type recording medium. In this instance, if a reflecting mirror is provided on the upper surface of the basement 40 as shown in FIGS. 5 and 6, the optical information recording apparatuses 3, 4 can also perform the fixing process on the transmission-type recording medium.

According to the third and fourth embodiments, the basement 40 is movable. However, the present invention is not limited to this specific configuration. For example, the basement may be stationary while other optical parts are movable to displace the passage of the light.

According to the fourth embodiment, the frosted glass member 42 is used as a rough-surfaced plate. However, as long as it has a frosted glass-like rough surface, other known materials such as figured glass and resin plate may be used.

Further, according to the fourth embodiment, the motor 43 which moves the frosted glass 42 within an extension plane of the glass surface across the passage of the light is used as a plate-moving device. However, the present invention is not limited to this specific configuration. As long as it can move the rough-surfaced plate within an extension plane of the plate surface across the passage of the light, other known mechanism may be used. For example, it is possible to provide a mechanism for reciprocating the rough-surfaced plate along the extension plane, or a mechanism for vertically rotating a tape-like rough-surfaced plate whose ends are connected to form an endless belt as well as for reciprocating this tape-like rough-surfaced plate between the fixing process position and the retracted position.

## Claims

1. A fixing apparatus for performing a fixing process on a holographic recording medium with an optically recordable recording layer, the fixing apparatus comprising:
a light source which illuminates the recording layer with fixing light; and
at least one reflecting mirror which reflects the fixing light passing through the recording layer and makes the fixing light go back again toward the recording layer.

2. The fixing apparatus according to claim 1, further comprising a rotating device which rotates the holographic recording medium.

3. The fixing apparatus according to claim 2, further comprising a moving device which moves at least one of the light source and the rotating device in a direction different from an optical axis of the light source.

4. The fixing apparatus according to claim 1 or 2, wherein the holographic recording medium is of a transmission-type medium which allows transmission of the fixing light, and wherein the light source is arranged to irradiate the fixing light diagonally to a surface of the holographic recording medium, and the at least one reflecting mirror comprises a pair of reflecting mirrors arranged on both sides of the holographic recording medium with the holographic recording medium interposed therebetween and facing to each reflecting mirror.

5. A method of performing a fixing process on a holographic recording medium with an optically recordable recording layer, the method comprising the steps of:
illuminating the recording layer with fixing light; and
reflecting the fixing light passing through the recording layer so as to make the fixing light go back again toward the recording layer.

6. The method according to claim 5, further comprising rotating the holographic recording medium.

7. The method according to claim 6, further comprising moving at least one of the fixing light and the holographic recording medium in a direction different from an optical axis of the fixing light.

8. The method according to claim 5 or 6, wherein the holographic recording medium is of a transmission-type medium which allows transmission of the fixing light, and wherein the fixing light is irradiated diagonally to a surface of the holographic recording medium upon illumination of the recording layer with the fixing light, and the fixing light is alternately reflected using a pair of reflecting mirrors arranged on both sides of the holographic recording medium with the holographic recording medium interposed therebetween and facing to each reflecting mirror.

9. An optical information recording apparatus which causes interference of a reference light and an information light in a recording layer of a holographic recording medium to generate interference patterns as information to be recorded and then writes the information in the recording layer, the optical information recording apparatus comprising:
a converter which converts light for illuminating the holographic recording medium into fixing light; and
at least one reflecting mirror which reflects the fixing light passing through the recording layer and makes the fixing light go back again toward the recording layer.

10. The optical information recording apparatus according to claim 9, further comprising an information light generating device which comprises a plurality of mirrors arranged in a matrix manner, and an adjusting device for adjusting or changing an angle of each mirror, the information light generating device generating the information light by means of reflecting light on the mirrors, and wherein the converter irradiates plural patterns of light as the fixing light to a position in the recording layer by means of changing the angle of each mirror, the converter changing the angle of each mirror of the information light generating device before diffusion is completed for residual substances which remain unchanged through the irradiation with the light.

11. The optical information recording apparatus according to claim 9, further comprising an information light generating device which comprises a plurality of liquid crystal elements arranged in a matrix manner each capable of changing its light transmissivity, and an adjusting device for adjusting or changing the light transmissivity of each liquid crystal element, the information light generating device generating the information light by means of making light pass through the liquid crystal elements, and wherein the converter irradiates plural patterns of light as the fixing light to a position in the recording layer by means of changing the light transmissivity of each liquid crystal element, the converter changing the light transmissivity of each liquid crystal element of the information light generating device before diffusion is completed for residual substances which remain unchanged through the irradiation with the light.

12. The optical information recording apparatus according to any one of claims 9 to 11, wherein the converter comprises a rough-surfaced plate having a frosted glass-like surface and allowing transmission of light, and a plate-moving device which moves the rough-surfaced plate within an extension plane of the frosted glass-like surface across a passage of the light.

13. The optical information recording apparatus according to any one of claims 9 to 12, wherein the optical information recording apparatus is used for recording information in a reflection-type holographic recording medium including a reflective layer capable of reflecting light in addition to the recording layer, and wherein the optical information recording apparatus further comprises a data reading device which reads light that is reflected at the interference patterns recorded in the recording layer, and the reflecting mirror is arranged to reflect the fixing light going in a direction toward the data reading device.

14. The optical information recording apparatus according to any one of claims 9 to 12, wherein the optical information recording apparatus is used for recording information in a transmission-type holographic recording medium which allows transmission of light, and wherein the at least one reflecting mirror comprises a first reflecting mirror arranged in an opposite position of the holographic recording medium from a position where the light is irradiated to the holographic recording medium.

15. The optical information recording apparatus according to claim 14, further comprising a data reading device which reads light that is reflected at the interference patterns recorded in the recording layer, and wherein the at least one reflecting mirror comprises the first reflecting mirror, and a second reflecting mirror that is arranged to reflect the fixing light going in a direction toward the data reading device.

16. A method of performing a fixing process on a holographic recording medium set in an optical information recording apparatus, the optical information recording apparatus causing interference of a reference light and an information light in a recording layer of the holographic recording medium to generate interference patterns as information to be recorded and thereafter writing the information in the recording layer, the method comprising:
converting light into fixing light and illuminating the recording layer with the fixing light; and
reflecting the fixing light passing through the recording layer so as to make the fixing light go back again toward the recording layer.

17. The method according to claim 16, wherein the optical information recording apparatus further comprises an information light generating device which comprises a plurality of mirrors arranged in a matrix manner, and an adjusting device for adjusting or changing an angle of each mirror, the information light generating device generating the information light by means of reflecting light on the mirrors, and wherein converting the light into the fixing light is performed by means of changing the angle of each mirror so that plural patterns of light are irradiated as the fixing light to a position in the recording layer, and the angle of each mirror of the information light generating device is further changed before diffusion is completed for residual substances which remain unchanged through the irradiation with the light.

18. The method according to claim 16, wherein the optical information recording apparatus further comprises an information light generating device which comprises a plurality of liquid crystal elements arranged in a matrix manner each capable of changing its light transmissivity, and an adjusting device for adjusting or changing the light transmissivity of each liquid crystal element, the information light generating device generating the information light by means of making light pass through the liquid crystal elements, and wherein converting the light into the fixing light is performed by changing the light transmissivity of each liquid crystal element so that plural patterns of light are irradiated as the fixing light to a position in the recording layer, and the light transmissivity of each liquid crystal element is further changed before diffusion is completed for residual substances which remain unchanged through the irradiation with the light.

19. The method according to any one of claims 16 to 18, wherein converting the light into the fixing light is performed by moving a rough-surfaced plate which has a frosted glass-like surface and allows transmission of light within an extension plane of the frosted glass-like surface across a passage of the light.

20. The method according to any one of claims 16 to 19, wherein the optical information recording apparatus is used for recording information in a reflection-type holographic recording medium including a reflective layer capable of reflecting light in addition to the recording layer, and further comprises a data reading device which reads light that is reflected at the interference patterns recorded in the recording layer, and wherein reflecting the fixing light is performed by reflecting the fixing light that goes in a direction toward the data reading device in the opposite direction.

21. The method according to any one of claims 16 to 19, wherein the optical information recording apparatus is used for recording information in a transmission-type holographic recording medium which allows transmission of light, and wherein reflecting the fixing light is performed by a first reflecting mirror that is arranged in an opposite position of the holographic recording medium from a position where the light is irradiated to the holographic recording medium.

22. The method according to claim 21, wherein the optical information recording apparatus further comprises a data reading device which reads light that is reflected at the interference patterns recorded in the recording layer, and wherein a second reflecting mirror reflects the fixing light reflected by the first reflecting mirror and going in a direction toward the data reading device.
